(19) Europäisches Patentamt
European Patent Office
Office européen des brevets

(11) **EP 4 566 995 A1**

(12) **EUROPEAN PATENT APPLICATION**
published in accordance with Art. 153(4) EPC

(43) Date of publication:
**11.06.2025 Bulletin 2025/24**

(21) Application number: 23850018.5

(22) Date of filing: **28.07.2023**

(51) International Patent Classification (IPC):
*C01F 7/441* (2022.01)    *C01F 7/021* (2022.01)
*C01F 7/30* (2022.01)    *C08K 3/013* (2018.01)
*C08K 3/22* (2006.01)    *C08L 101/00* (2006.01)

(52) Cooperative Patent Classification (CPC):
**C01F 7/021; C01F 7/30; C01F 7/441; C08K 3/013;
C08K 3/22; C08L 101/00**

(86) International application number:
**PCT/JP2023/027768**

(87) International publication number:
**WO 2024/029463 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **04.08.2022   JP 2022124995**

(71) Applicant: **Sumitomo Chemical Company, Limited
Tokyo 103-6020 (JP)**

(72) Inventors:
• **NAKAYAMA, Atsushi
Niihama-shi, Ehime 792-8521 (JP)**
• **SAKAKI, Shota
Niihama-shi, Ehime 792-8521 (JP)**

(74) Representative: **Vossius & Partner
Patentanwälte Rechtsanwälte mbB
Siebertstrasse 3
81675 München (DE)**

(54) **CERAMIC POWDER, RESIN COMPOSITION AND METHOD FOR PRODUCING CERAMIC POWDER**

(57)    A ceramic powder having a circularity C50 of 0.83 or more at a cumulative percentage of 50% from a lower circularity side in a number-based cumulative circularity distribution, and a circularity C10 of less than 0.81 at a cumulative percentage of 10% from the lower circularity side in the number-based cumulative circularity distribution.

Fig. 1

**Description**

Technical Field

The present disclosure relates to a ceramic powder, a resin composition, and a method for producing the ceramic powder.

Background Art

Heat generated by energizing electronic components is likely to adversely affect the performance of the electronic components and, accordingly, the heat is desired to be immediately radiated. Therefore, the material composing a heat-conductive member for radiation is desired to exhibit high heat conductivity. Examples of the heat-conductive member include a heat-conductive resin composition containing a resin and an inorganic particle, and a ceramic particle is used as the inorganic particle. For example, Patent Literature 1 discloses, as a particle material having a high heat conductivity, a particle material containing alumina as a main component and having a volume average particle size of 70 to 200 $\mu$m, a sphericity of 0.89 or more and less than 0.99, and an $\alpha$-transformation ratio of 40 to 85%, and providing a result of an abrasion test for equipment of 0.017 g or less.

Citation List

Patent Literature

Patent Literature 1: International Publication No. WO 2020/170307

Summary of Invention

Problems to be Solved by Invention

When mixing a heat-conductive particle with a resin, in order to ensure uniform properties of the member, it is preferred that the heat-conductive particle and the resin are homogeneously mixed together and, for the homogeneous mixing, the heat-conductive particle during mixing with the resin is required to have high flowability. Patent Literature 1 discloses a heat-conductive substance as well, but more study is considered to be needed to further enhance the heat conductivity.
The present disclosure has been made in view of the above situation, and the object of the present disclosure is to provide a ceramic powder having high heat conductivity and having excellent flowability during mixing with a resin, a method for producing the ceramic powder, and a resin composition comprising the ceramic powder.

Means to Solve the Problems

Embodiment 1 of the present invention is a ceramic powder having:
a circularity C50 of 0.83 or more at a cumulative percentage of 50% from the lower circularity side in a number-based cumulative circularity distribution; and a circularity C10 of less than 0.81 at a cumulative percentage of 10% from the lower circularity side in a number-based cumulative circularity distribution.
Embodiment 2 of the present invention is the ceramic powder according to Embodiment 1, wherein the ceramic powder has a particle size D50 at a cumulative percentage of 50% from a finer particle side in a volume-based cumulative particle size distribution of 70 to 250 $\mu$m.
Embodiment 3 of the present invention is the ceramic powder according to Embodiment 1 or 2, wherein a circularity C90 at a cumulative percentage of 90% from the lower circularity side in the number-based cumulative circularity distribution, the circularity C10, and the circularity C50 satisfy the following expression (1):

$$(C90 - C10) / C50 \geq 0.11 ...(1).$$

Embodiment 4 of the present invention is the ceramic powder according to any one of Embodiments 1 to 3, wherein the ceramic powder is an alumina powder comprising 90% or more of an $\alpha$-alumina phase.
Embodiment 5 of the present invention is a resin composition comprising the ceramic powder according to any one of Embodiments 1 to 4.
Embodiment 6 of the present invention is a method for producing the ceramic powder according to any one of Embodiments 1 to 4, the method comprising the steps of:

mixing and granulating a raw material powder by wet granulation to obtain a mixture;
drying the mixture at 30°C or more and 150°C or less to obtain a dry powder having a moisture content of 3 mass % or more and 55 mass % or less; and firing the dry powder.

Effects of Invention

According to the present disclosure, a ceramic powder having high heat conductivity and having excellent flowability during mixing with a resin, a method for producing the ceramic powder, and a resin composition comprising the ceramic powder may be provided.

Brief Description of Drawings

[Figure 1] Figure 1 shows number-based cumulative circularity distributions the alumina raw material particle 1 and the alumina raw material particle 2 used in Examples.
[Figure 2] Figure 2 is a scanning electron microscope (SEM) photograph of the alumina raw material particle 1 used in Examples.
[Figure 3] Figure 3 is a scanning electron microscope (SEM) photograph of the alumina raw material particle 2 used in Examples.

Embodiments for Carrying out Invention

The present inventors conducted intensive studies to obtain a ceramic powder having high heat conductivity and having excellent flowability during mixing with a resin. As a result, they found that the shape of the ceramic powder is sufficient if a circularity C50 at a cumulative percentage of 50% and a circularity C10 at a cumulative percentage of 10% from a lower circularity side in a number-based cumulative circularity distribution each fall within a predetermined range. The ceramic powder according to the present embodiments will hereinafter be described in detail.

[Ceramic Powder]

[Circularity C50 at Cumulative Percentage of 50% from Lower Circularity Side in number-based Cumulative Circularity Distribution, and Circularity C10 at Cumulative Percentage of 10% from Lower Circularity Side in number-based Cumulative Circularity Distribution

The ceramic powder according to the present embodiments has a circularity C50 at a cumulative percentage of 50% from a lower circularity side in a number-based cumulative circularity distribution (hereinafter sometimes referred to as "circularity C50") of 0.83 or more, and a circularity C10 at a cumulative percentage of 10% from the lower circularity side in the number-based cumulative circularity distribution (hereinafter sometimes referred to as "circularity C10") of less than 0.81. If the circularity C50 is 0.83 or more, flowability during mixing with a resin is ensured, and if the circularity C10 is less than 0.81 and the ceramic powder having lower circularity is present in a small ratio, the contact area of the particles is increased, whereby a resin composition in which the ceramic powder is homogeneously dispersed and which exhibits high heat conductivity may be produced.
The circularity C50 is preferably 0.84 or more. In addition, it is preferred that the ceramic powder contains a large number of spherical particles having relatively low circularity, whereby higher heat conductivity may be achieved while ensuring excellent flowability during mixing with a resin. From this viewpoint, the circularity C50 is preferably less than 0.89. The circularity C50 is more preferably 0.88 or less, and further preferably 0.87 or less.
The circularity C10 is, from the viewpoints of increasing the contact area of the particles and ensuring high heat conductivity, preferably 0.80 or less, and more preferably 0.78 or less. On the other hand, from the viewpoint of ensuring flowability during mixing with a resin, the circularity C10 is preferably 0.75 or more, and more preferably 0.76 or more. The circularity is determined by the method described in Examples described later.

[(C90 - C10) / C50]

The circularity C90 at a cumulative percentage of 90% from the lower circularity side in the number-based cumulative circularity distribution, the circularity C10, and the circularity C50 preferably satisfy the following expression (1):

$$(C90 - C10) / C50 \geq 0.11 \ ...(1).$$

(C90 - C10) / C50 (hereinafter sometimes referred to as "span value") is an index showing the spread of the distribution of the circularity, and the higher this span value is, it means the distribution of the circularity is wider. The ceramic powder of the present embodiments preferably has a span value of 0.11 or more. That is, when the value of each of the circularity C10 and the circularity C50 is specified, and the span value is 0.11 or more, and thus the distribution of the circularity has a spread, higher heat conductivity may be achieved while ensuring excellent flowability during mixing with a resin. The span value is more preferably 0.12 or more, and further preferably 0.15 or more. From the viewpoint of obtaining both high heat conductivity and reduced viscosity of the resin composition, the span value is preferably 0.30 or less.

Examples of the ceramic composing the ceramic powder include: oxide ceramics such as alumina, magnesia, magnesia spinel, zirconia, silica, titania, ceria, yttria, zinc oxide, and beryllium oxide; and nitride ceramics such as aluminum nitride, boron nitride, silicon nitride, and titanium nitride. The ceramic powder may be composed of powder of one type of these ceramics, or composed of powder of a plurality types of these ceramics.

The ceramic powder preferably contains alumina powder, and the ceramic powder more preferably consists of alumina powder, and further preferably consists of alumina powder containing 90% or more of an $\alpha$-alumina phase as described later.

[Particle Size D50 at Cumulative Percentage of 50% from Finer Particle Side in Cumulative Particle Size Distribution on Volume Basis]

The ceramic powder according to the present embodiments preferably has a particle size D50 at a cumulative percentage of 50% from a finer particle side in a cumulative particle size distribution on a volume basis (hereinafter sometimes referred to as "D50") of 70 to 250 $\mu$m. If D50 of the ceramic powder contained in the resin composition is at a predetermined level or more, a resin composition having high heat conductivity may be obtained. The reason thereof is considered to be as follows.

As D50 of the ceramic powder becomes larger, the total of the surface area (total surface area) of the ceramic powder per unit mass becomes smaller. Therefore, when mixing the ceramic powder with a resin to produce the resin composition, the total of the area (total area) of the ceramic powder in contact with the resin may be reduced by using a ceramic powder having a larger average particle size, even though the volume proportion is the same. The interface between the ceramic powder and the resin scatters propagating phonon and, therefore, it is considered that the heat conductivity may be enhanced by reducing the total area.

From the above-described viewpoint, the ceramic powder according to the embodiments of the present invention preferably has D50 of 70 $\mu$m or more. If D50 is 70 $\mu$m or more, the total area of the interface during mixing with a resin at a predetermined ratio may be reduced more than a case where D50 is less than 70 $\mu$m, whereby a resin composition having a higher heat conductivity may be preferably obtained. D50 of the ceramic powder is preferably more than 130 $\mu$m, more preferably 160 $\mu$m or more, further preferably more than 160 $\mu$m, and further more preferably 170 $\mu$m or more. On the other hand, from the viewpoint of ensuring kneading property with the resin, D50 is preferably 250 $\mu$m or less, and more preferably 220 $\mu$m or less. D50 of the ceramic powder is measured by the method described in Examples described later.

The ceramic powder is preferably an alumina powder containing 90% or more of an $\alpha$-alumina phase. That is, it is preferred that the $\alpha$-transformation ratio of the alumina powder described later is 90% or more. $\alpha$ alumina has high heat conductivity and, therefore, the heat conductivity of the alumina powder may be enhanced by increasing the $\alpha$-transformation ratio indicating the content (mass %) of the $\alpha$-alumina phase in the alumina powder. If the alumina powder has a high $\alpha$-transformation ratio, which is an index of the content of $\alpha$ alumina, of 90% or more, high heat conductivity may be achieved. The $\alpha$-transformation ratio of the alumina powder is preferably 95% or more, and most preferably 100%. The $\alpha$-transformation ratio of the alumina powder may be 90% or more and less than 95%. If the $\alpha$-transformation ratio falls within the range, an alumina powder exhibiting a heat conductivity having little difference from the heat conductivity of an alumina powder containing 100% of an $\alpha$-alumina phase may be produced more easily.

Herein, "a-transformation ratio" is the content of the $\alpha$-alumina phase (mass %) with respect to all alumina contained in the alumina powder, as described above.

The alumina powder is subjected to measurement by powder X-ray diffraction method, and the peak height ($I_{25.6}$) of the $\alpha$ phase (012 surface) observed at the point of $2\theta = 25.6°$ and the peak height ($I_{46}$) of the $\gamma$ phase, the $\eta$ phase, the $\chi$ phase, the K phase, the $\theta$ phase, and the $\delta$ phase observed at the point of $2\theta = 46°$ are determined from the obtained diffraction spectrum and then the $\alpha$-transformation ratio is calculated by the following expression (2).

$$\alpha\text{-transformation ratio} = I_{25.6} / (I_{25.6} + I_{46}) \times 100(\%)$$

$$(2)$$

Although the alumina powder according to the present embodiments most preferably has an $\alpha$-transformation ratio of 100%, an alumina other than $\alpha$ alumina (such as $\delta$ alumina and $\theta$ alumina) may be contained by, for example, approximately 10% or less, which does not hinder the object of the present embodiments.

An alumina other than $\alpha$ alumina may be contained in any mode. For example, both $\alpha$ alumina and an alumina other than $\alpha$ alumina may be contained inside one particle of the alumina powder. Also, one alumina powder particle consisting of $\alpha$ alumina only and another alumina powder particle consisting of an alumina other than $\alpha$ alumina only may coexist in the alumina powder.

[Method for Producing Ceramic Powder]

The method for producing the ceramic powder according to the present embodiments is not particularly limited as long as a ceramic powder having the distribution of the circularity as mentioned above may be obtained. An example of the method for producing the ceramic powder according to the present embodiments is a method for producing a ceramic powder comprising the steps of:

mixing and granulating a raw material powder by wet granulation to obtain a mixture;
drying the mixture at 30°C or more and 150°C or less to obtain a dry powder having a moisture content of 3 mass % or more and 55 mass % or less; and firing the dry powder.

As an example of the method for producing the ceramic powder, a case where the alumina powder is produced will hereinafter be described, but the method for producing the ceramic powder is not limited thereto. Where the alumina powder is produced as the ceramic powder, the alumina raw material particle composing the alumina powder may be produced by the above method. A case will hereinafter be described where an $\alpha$-alumina raw material particle is produced as the alumina raw material particle. That is, the $\alpha$-alumina raw material particle may be produced when, as a raw material powder, for example, an $\alpha$-alumina precursor and an $\alpha$-alumina seed particle are mixed and granulated together to obtain a mixture, which is then dried at 30°C or more and 150°C or less to obtain 55 mass % or less of a dry powder having a moisture content of 3 mass % or more, and then the dry powder is fired to obtain an $\alpha$-alumina coarse powder, followed by sieving of the $\alpha$-alumina coarse powder.

The $\alpha$-alumina precursor is a compound transitable into $\alpha$ alumina by firing, and examples thereof include: aluminum alkoxides such as aluminum isopropoxide, aluminum ethoxide, aluminum s-butoxide, and aluminum t-butoxide; aluminum hydroxide; and transition alumina such as $\gamma$ alumina, $\delta$ alumina, and $\theta$ alumina.

The aluminum hydroxide is obtained by, for example, hydrolysis of a hydrolysable aluminum compound. Examples of the hydrolysable aluminum compound include aluminum alkoxides and aluminum chloride, but from the viewpoint that a high-purity aluminum hydroxide having a purity of 99.99 mass % or more is easily obtained, aluminum alkoxides are preferred. The aluminum hydroxide is not particularly limited, but preferably has high purity and a crystal system belonging to boehmite.

The center particle size of the $\alpha$-alumina seed particle is preferably 0.1 to 1.0 $\mu$m, and more preferably 0.1 to 0.4 $\mu$m. The $\alpha$-alumina seed particle may be obtained by, for example, pulverizing a high-purity $\alpha$-alumina particle having a purity of 99.99 mass % or more. As the pulverizing method, a method in which a solvent is added to the high-purity $\alpha$-alumina particle, and the high-purity $\alpha$-alumina particle is subjected to wet pulverizing in a slurry state by using a pulverizing device such as a ball mill and a medium agitation mill to obtain the $\alpha$-alumina seed particle is preferred from the viewpoint of homogeneously mixing the $\alpha$-alumina seed particle with the $\alpha$-alumina precursor in a post process. Water is typically used as the solvent, and a dispersant may be added for pulverization in order to pulverize the high-purity $\alpha$-alumina particle in a higher dispersion. As the dispersant to be added, for example, a polymer dispersant such as a polyacrylic acid ammonium salt is preferred so that the dispersant volatiles in firing and does not remain as impurities, in order to maintain high purity.

Where, for example, aluminum hydroxide is used as the $\alpha$-alumina precursor, the amount of the $\alpha$-alumina seed particle to be added to the aluminum hydroxide is preferably 0.1 to 10 parts by weight, and more preferably 0.3 to 7 parts by weight, based on 100 parts by weight of the $\alpha$-alumina powder after firing. If the amount to be added is less than 0.1 parts by weight, it is difficult to obtain the $\alpha$-alumina powder, and on the other hand, even if the amount to be added is more than 10 parts by weight, the physical property of the obtained $\alpha$-alumina powder does not change, resulting in unnecessary increase in the amount to be added, which is not preferred.

The moisture content of the $\alpha$-alumina seed particle slurry obtained by the pulverizing is, based on 100 parts by weight of aluminum hydroxide, preferably 50 to 120 parts by weight. If the moisture content is 50 parts by weight or more, the flowability of the mixture is enhanced, thereby allowing for sufficient mixing of the $\alpha$-alumina seed particle with the aluminum hydroxide. On the other hand, if the moisture content is 120 parts by weight or less, slurring of the mixture is suppressed, whereby an excessive increase in the particle size of the granulated particle may be suppressed. In addition, the energy required for the drying may be reduced. The moisture content is more preferably 60 to 90 parts by weight.

As a method in which the α-alumina seed particle slurry and the α-alumina precursor are mixed and granulated together to obtain the mixture, a method such as agitation, ball milling, and ultrasonic dispersion may be adopted. Where an aluminum hydroxide particle is used as the α-alumina precursor, in order to homogeneously mix the α-alumina seed particle, it is preferred to use a blade-type mixer from the viewpoint of being able to perform mixing while applying shear force. Examples of the mixer include the mixer used in Examples. Examples of the granulation method for obtaining the mixture other than the method described above include a method in which forming is performed with a jet mill to obtain a rounded alumina particle, pan granulation, and a method in which a granule is obtained by spray-drying.

The mixture obtained by the mixing and granulating is dried to remove water. The temperature and the drying time during the drying may be adjusted so that the moisture content of the dry powder is 3 mass % or more and 55 mass % or less. From the viewpoint of suppressing occurrence of a particle having lower circularity due to breaking of the particle occurred when the particles collide with each other, the moisture content of the dry powder is preferably 30 mass % or more and 45 mass % or less.

The drying temperature may be 30°C or more and 150°C or less. From the viewpoint of suppressing occurrence of a particle having lower circularity due to breaking of the particle occurred when the particles collide with each other, the temperature is preferably 35°C or more and 120°C or less. In addition, from the viewpoint of enhancing loose bulk density, performing fluidized drying by using a fluid-bed dryer is preferred.

A spherical α-alumina coarse powder such that occurrence of a fragment-shaped fine particle having low circularity is suppressed may be obtained by firing the dry powder having the moisture content. The firing temperature is, from the viewpoints of sufficiently advancing transition of aluminum hydroxide into α alumina and easily obtaining an α-alumina coarse powder having high purity, preferably 1200°C or more and 1500°C or less, and more preferably 1250°C or more and 1450°C or less.

The rate of temperature increase to the firing temperature may be, for example, 30°C/hour to 500°C/hour. The firing holding time may be a period of time sufficient to obtain α alumina by α transition of the α-alumina precursor. The firing holding time depends on the type of the aluminum compound to be used, the ratio of the amount to be used of the α-alumina precursor to that of the α-alumina seed particle, the type of the firing furnace, the firing temperature, the firing atmosphere, and the like, but is, for example, 30 minutes or more and 24 hours or less, and preferably 1 hour or more and 10 hours or less.

The firing atmosphere may be an air atmosphere. Alternatively, the firing may be performed in an inert gas such as nitrogen gas and argon gas. The firing may be performed under a wet atmosphere having high water-vapor partial pressure.

For the firing, ordinary firing furnaces such as a tubular electric furnace, a box-type electric furnace, a tunnel furnace, a far infrared furnace, a microwave heating furnace, a shaft furnace, a reverberatory furnace, a rotary furnace, and a roller hearth furnace may be used. The mixture may be fired in a batch system or a continuous system. Also, the mixture may be fired in a stationary system or a fluidized system.

The obtained α-alumina coarse powder typically has a spreading distribution of the particle size and, therefore, an α-alumina powder having a desired particle size distribution may be obtained by, for example, sieving the α-alumina coarse powder.

Examples of the method for producing a spherical alumina having a high circularity and having a shape close to a perfect circle include a flame fusion method, but the spherical alumina particles having a shape close to a perfect circle are likely to make a point contact between them and, therefore, it is difficult to obtain high heat conductivity. In the present embodiments, from the viewpoint that it is preferred to obtain, as the α-alumina raw material particle, a powder having a spherical shape but having a circularity lower than the circularity of a perfect circle, the α-alumina raw material particle is preferably produced by the method described above than by a flame fusion method.

The above method describes a method for producing the alumina powder, but, for example, it is possible to perform granulating by using, as a solvent used in the production method, a binder containing one or more of a resin, a wax, a plasticizer, an oil and fat, a surfactant, varnish, an organic solvent and the like, instead of water, and then perform degreasing and firing, whereby a ceramic powder having low water resistance such as of magnesia or a nitride ceramic may be produced as well.

As the ceramic powder according to the present embodiments, for example, the alumina powder may be formed only with the alumina raw material particle produced by the above method, and in addition, the alumina powder may be obtained by mixing the alumina raw material particle produced by the above method with an alumina raw material particle produced by a method other than the above method within a range satisfying the circularity of the ceramic powder according to the present embodiments.

[Resin Composition]

By using the ceramic powder according to the present embodiments as, for example, a filler for a resin composition, a resin composition (composite) having high heat conductivity may be obtained. The resin composition may contain, in addition to the ceramic powder according to the present embodiments and a resin, a ceramic powder other than that of the present embodiments. For example, as in the production of the resin composition in Examples described later, the resin composition may contain, for example, in order to achieve high filling, in addition to the alumina powder according to the present embodiments and the resin, as an alumina powder for filling other than the ceramic powder according to the present embodiments, a medium-sized alumina particle having a particle size of several microns to several tens of microns, and a small-sized alumina particle having a particle size in a level of several hundred nm.

In order to obtain a resin composition exhibiting an excellent heat conductivity, the proportion (blending ratio) of the ceramic powder according to the present embodiments contained in the resin composition is preferably 40 volume % or more, and more preferably 50 volume % or more. On the other hand, from the viewpoint of ensuring flexibility peculiar to resins, the proportion of the ceramic powder is preferably 75 volume % or less, and more preferably 73 volume % or less.

From the viewpoint of enhancing filling property of the ceramic in order to ensure higher heat conductivity of the resin composition, the ratio of the sum total of the ceramic powder according to the present embodiments and, for example, an alumina powder for filling other than the ceramic powder according to the present embodiments, to the resin composition, is preferably 45 volume % or more and 90 volume % or less.

The resin used for the resin composition may be selected from a thermoplastic resin, a thermoplastic elastomer, and a thermosetting resin. These resins may be each used alone, or two or more of these resins may be used in combination.

Examples of the thermoplastic resin include: polyolefin resins such as polyethylenes, polypropylenes, and ethylene-propylene copolymers; polymethylpentenes; polyvinyl chlorides; polyvinylidene chlorides; polyvinyl acetates; ethylene-vinyl acetate copolymers; polyvinyl alcohols; polyvinyl acetals; fluorinated polymers such as polyvinylidene fluorides and polytetrafluoroethylenes; polyethylene terephthalates; polybutylene terephthalates; polyethylene naphthalates; polystyrenes; polyacrylonitriles; styrene-acrylonitrile copolymers; acrylonitrile-butadiene-styrene copolymer (ABS) resins; polyphenylene-ether copolymer (PPE) resins; modified PPE resins; aliphatic polyamides; aromatic polyamides; polyimides; polyamideimides; polymethacrylates; polymethacrylic acid esters such as polymethacrylic acid methyl esters; polyacrylic acids; polycarbonates; polyphenylene sulfides; polysulfones; polyethersulfones; polyethernitriles; polyetherketones; polyketones; liquid crystal polymers; silicone resins; and ionomers.

Examples of the thermoplastic elastomer include styrene-butadiene block copolymers or hydrogenated products thereof, styrene-isoprene block copolymers or hydrogenated products thereof, styrene thermoplastic elastomers, olefinic thermoplastic elastomers, vinyl chloride thermoplastic elastomers, polyester thermoplastic elastomers, polyurethane thermoplastic elastomers, and polyamide thermoplastic elastomers.

Examples of the thermosetting resin include crosslinked rubbers, epoxy resins, phenolic resins, polyimide resins, unsaturated polyester resins, and diallyl phthalate resins. Specific examples of the crosslinked rubber include natural rubber, acrylic rubber, butadiene rubber, isoprene rubber, styrene-butadiene copolymer rubber, nitrile rubber, hydrogenated nitrile rubber, chloroprene rubber, ethylene-propylene copolymer rubber, chlorinated polyethylene rubber, chlorosulfonated polyethylene rubber, butyl rubber, halogenated butyl rubber, fluorine rubber, urethane rubber, and silicone rubber.

From the viewpoints of processability and properties, polyolefin resins, acrylic resins, polyimide resins, polyamide resins, polyamideimide resins, epoxy resins, phenolic resins, and silicone resins are preferably used.

Furthermore, known additives such as plasticizers, curing accelerators, coupling agents, fillers, pigments, flame retardants, antioxidants, surfactants, compatibilizers, weather-resistance improving agents, antiblocking agents, antistatic agents, leveling agents, and release agents may be blended each alone or in a combination of two or more types into these resin compositions appropriately as necessary, in a range that does not impair the effect of the invention.

The method for producing the resin composition will hereinafter be described. The resin composition may be obtained by mixing the ceramic powder according to the present embodiments with a resin by using a known method that is commonly used. For example, when the resin is in a liquid state (for example, liquid epoxy resin), the resin composition may be obtained by mixing the liquid resin, the ceramic powder, and a curing agent together and then curing the mixture by heat, ultraviolet rays, or the like. The curing agent, the mixing method, and the curing method used here may be known. On the other hand, when the resin is in a solid state (for example, polyolefin resins and acrylic resins), the resin composition may be obtained by mixing the ceramic powder with a resin and then kneading the mixture by a known method such as melt-kneading.

Aspects of the resin composition according to the present embodiments include a blend in which the raw material containing the ceramic particle and the resin is blended, a mixture in which the raw material containing the ceramic particle and the resin is mixed, a formed object formed from the mixture, and a cured object (shaped product) in which the mixture or the formed object has been subjected to curing treatment.

Examples

The embodiments of the present invention will hereinafter be described more specifically using Examples. The present disclosure is not limited by following Examples, and appropriate modification may be applied thereto for implementation within a range that may meet the spirit described above and described later, and any of such modifications are within the technical scope of the present disclosure.

[Preparation of Alumina Raw Material Particle]

As the alumina raw material particle, alumina raw material particles 1 to 3 described below were prepared. The alumina raw material particles 1 and 2 were each obtained by firing a mixture of an $\alpha$-alumina precursor and an $\alpha$-alumina seed particle to obtain an $\alpha$-alumina coarse powder, and then sieving the obtained $\alpha$-alumina coarse powder.

(Alumina Raw Material Particle 1)

A high-purity $\alpha$ alumina (product name: AKP-53, manufactured by Sumitomo Chemical Co., Ltd.) was pulverized with a wet ball mill to obtain an $\alpha$-alumina seed particle. The average particle size of the $\alpha$-alumina seed particles was 0.25 $\mu$m.

The $\alpha$-alumina seed particle was mixed with pure water to produce an $\alpha$-alumina seed particle slurry containing, in terms of solid-content concentration, 20 parts by weight of the $\alpha$-alumina seed particle. On the other hand, as the $\alpha$-alumina precursor, a high-purity aluminum hydroxide obtained by a method for hydrolyzing aluminum alkoxide was prepared.

The high-purity aluminum hydroxide and the $\alpha$-alumina seed slurry were mixed and granulated together with a blade-type mixer including, on the inner surface thereof, a stirring blade having a multistage cross-shaped disassembling structure rotatable at high speed to obtain a mixture. The $\alpha$-alumina seed particle contained in the $\alpha$-alumina seed particle slurry added during mixing was 1.7 parts by weight based on 100 parts by weight of the $\alpha$-alumina powder after firing. The moisture content of the $\alpha$-alumina seed particle slurry was 73 parts by weight based on 100 parts by weight of the aluminum hydroxide.

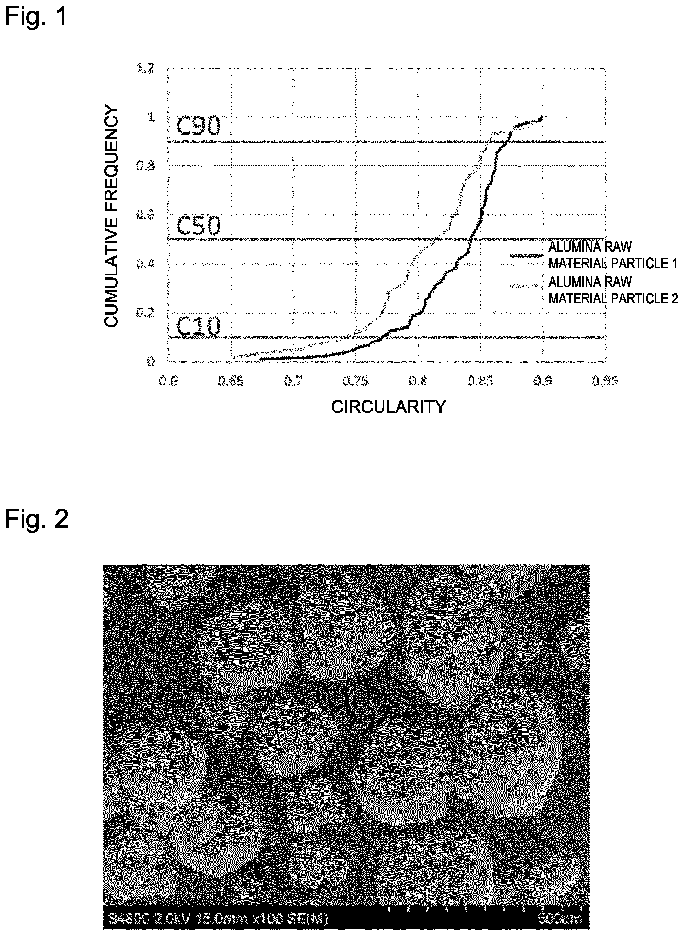

The mixture obtained by the mixing was dried with a fluid-bed dryer at 90°C for 10 minutes as the drying condition to obtain, as a dry powder, an $\alpha$-alumina precursor powder containing an alumina seed. The moisture content of the obtained dry powder was 38 mass %. Next, the $\alpha$-alumina precursor powder containing the alumina seed (dry powder) was fired at a temperature-increase rate of 100°C/hour at a firing temperature of 1340°C for 4 hours to obtain an $\alpha$-alumina coarse powder. Thereafter, the powder was sieved to obtain an alumina raw material particle 1 having D50 of 160 $\mu$m exhibiting the Volume-based cumulative circularity distribution shown in Figure 1. Also, an example of the SEM photograph of the alumina raw material particle 1 is shown in Figure 2.

(Alumina Raw Material Particle 2)

A high-purity $\alpha$ alumina (product name: AKP-53, manufactured by Sumitomo Chemical Co., Ltd.) was pulverized with a wet ball mill to obtain an $\alpha$-alumina seed particle. The average particle size of the $\alpha$-alumina seed particles was 0.25 $\mu$m.

The $\alpha$-alumina seed particle was mixed with pure water to produce an $\alpha$-alumina seed particle slurry containing, in terms of solid-content concentration, 20 parts by weight of the $\alpha$-alumina seed particle. On the other hand, as the $\alpha$-alumina precursor, a high-purity aluminum hydroxide obtained by a method for hydrolyzing aluminum alkoxide was prepared.

The high-purity aluminum hydroxide and the $\alpha$-alumina seed slurry were mixed together with a blender-type mixer including, on the inner surface thereof, a stirring blade having a multistage cross-shaped disassembling structure rotatable at high speed. The $\alpha$ alumina contained in the $\alpha$-alumina seed particle slurry added during mixing was 1.7 parts by weight based on 100 parts by weight of the $\alpha$-alumina powder after firing. The moisture content of the $\alpha$-alumina seed particle slurry was 149 parts by weight based on 100 parts by weight of the aluminum hydroxide.

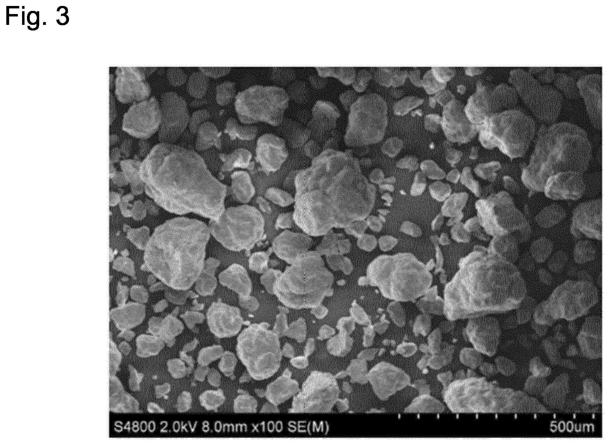

The mixed powder obtained by the mixing was dried with a fluid-bed dryer at 200°C for 40 minutes as the drying condition to obtain, as a dry powder, an $\alpha$-alumina precursor powder containing an alumina seed. The moisture content of the obtained dry powder was 5 mass % or less. Next, the $\alpha$-alumina precursor powder containing the alumina seed (dry powder) was fired at a temperature-increase rate of 100°C/hour at a firing temperature of 1340°C for 4 hours to obtain an $\alpha$-alumina coarse powder. Thereafter, the powder was sieved to obtain an alumina raw material particle 2 having D50 of 150 $\mu$m exhibiting the volume-based cumulative circularity distribution shown in Figure 1. Also, an example of the SEM photograph of the alumina raw material particle 2 is shown in Figure 3.

(Alumina Raw Material Particle 3)

A commercially available spherical alumina powder (the particle size D50: 200 $\mu$m) was used.

[Preparation of Alumina Powder]

The alumina raw material particles 1 to 3 prepared as described above were, as shown in Table 1, blended in the ratio (volume ratio) shown in Table 1 for each of Examples 1 to 3 and Comparative Examples 1 to 3, and the resulting blend was homogeneously mixed by using a rotatable and revolvable mixer (ARV-310) manufactured by THINKY CORPORATION to obtain an alumina powder as the ceramic powder. Any of the alumina raw material particles 1 to 3 were $\alpha$-alumina particles, and the alumina powders of Examples 1 to 3 and Comparative Examples 1 to 3 obtained by using one type of the alumina raw material particles alone or by blending a plurality types of the alumina raw material particles were each composed of an $\alpha$-alumina phase.

The circularity and the particle size of the obtained alumina powder were determined in the following manner.

[Circularity of Alumina Powder]

The circularity of the alumina powder for each of Examples and Comparative Examples shown in Table 1 was calculated in the following steps for evaluation.

The SEM image of each alumina powder was obtained in the following manner. The alumina powder was fixed on a carbon tape. The SEM image was obtained at a predetermined accelerating voltage with a scanning electron microscope (manufactured by Hitachi High-Tech Corporation, product name: S-4800).

The obtained SEM image was, by using an image processing software (for example, ImageJ (https://fiji.sc/), which is a free software), subjected to automatic binarization process after selecting the analysis area. In the processed image, the area of the particle surrounded by an outline ("area" in the following expression (3)), and the perimeter of the particle ("perimeter" in the following expression (3)) were each calculated. Thereafter, the circularity of one particle was calculated by the following expression (3).

Circularity of one particle = $4 \times \pi \times$ area / (perimeter$^2$) ... (3)

From the results of the above measurement and calculation, a number-based cumulative circularity distribution was produced, and C10, which was a circularity at a cumulative percentage of 10%, C50, which was a circularity at a cumulative percentage of 50%, and C90, which was a circularity at a cumulative percentage of 90%, in the ascending order of the circularity, i.e., from the lower circularity side, were each calculated.

Furthermore, by using the circularity C10 at a cumulative percentage of 10%, the circularity C50 at a cumulative percentage of 50%, and the circularity C90 at a cumulative percentage of 90%, the span value was calculated from the following expression (4).

$$\text{Span value} = (C90 - C10) \text{ / } C50...(4)$$

[Particle Size of Alumina Powder]

To determine D50 of the alumina powder, the particle size distribution of the alumina powder was measured by a laser diffraction method by using "Microtrac MT3300EXII" manufactured by MicrotracBEL Corp. as a laser particle size distribution measuring device, and the particle size D50 at a cumulative percentage equivalent to 50% on volume basis was determined. As the measurement sample, a powder dispersing solution in which the powder as a measurement object was added to 0.2 mass % of a sodium hexametaphosphate aqueous solution so that the laser scattering intensity was appropriate and then the resulting solution was subjected to a dispersing process at a device built-in ultrasonic wave of 40 W for 5 minutes was used. The diffractive index of the alumina was set to 1.76.

[Table 1]

| | | | Example 1 | Example 2 | Example 3 | Comparative Example 1 | Comparative Example 2 | Comparative Example 3 |
|---|---|---|---|---|---|---|---|---|
| Ratio of each alumina raw material particle to alumina powder (volume ratio) | | Alumina raw material particle 1 | 100 | 0 | 0 | 0 | 0 | 0 |
| | | Alumina raw material particle 2 | 0 | 50 | 80 | 0 | 20 | 100 |
| | | Alumina raw material particle 3 | 0 | 50 | 20 | 100 | 80 | 0 |
| Physical property of alumina powder | Particle size | D50 ($\mu$m) | 160 | 180 | 170 | 200 | 190 | 150 |
| | Cumulative circularity | Circularity C10 at a cumulative percentage of 10% | 0.77 | 0.76 | 0.76 | 0.89 | 0.81 | 0.74 |
| | | Circularity C50 at a cumulative percentage of 50% | 0.84 | 0.84 | 0.83 | 0.90 | 0.90 | 0.82 |
| | | Circularity C90 at a cumulative percentage of 90% | 0.87 | 0.90 | 0.90 | 0.91 | 0.90 | 0.86 |
| | | (C90-C10)/C50 | 0.12 | 0.17 | 0.17 | 0.01 | 0.10 | 0.14 |

[Measurement of Viscosity of Resin Composition]

(Production of Resin Composition for Viscosity Measurement)

First, a resin composition for viscosity measurement was produced. The ratio (mass ratio) of the alumina powder shown in Table 1, AA-5 (particle size: 5 $\mu$m) manufactured by Sumitomo Chemical Co., Ltd., and AA-04 (particle size: 0.4 $\mu$m) manufactured by Sumitomo Chemical Co., Ltd. was adjusted to 6:3:1. The AA-5 and the AA-04 are each an alumina powder for filling other than the alumina powder according to the present embodiments, and are an alumina middle-sized particle and an alumina small-sized particle, respectively, used for achieving high filling on the supposition of an actual use. In present Examples, any of the Examples use the middle-sized alumina particle and the small-sized alumina particle of the same type and of the same amount and, therefore, the difference in viscosity among the Examples can be attributed to the difference among the alumina powders shown in Table 1.

As a resin, a resin 1 (53-type epoxy main agent (manufactured by SANKEI Co., Ltd.)) was prepared. Thereafter, the resin 1 was blended with the alumina powders to the blending ratio shown in Table 2 (mass ratio of the alumina powders and the resin 1), and then the resulting blend was mixed and kneaded by using a rotatable and revolvable mixer (ARV-310) manufactured by THINKY CORPORATION to obtain a resin composition for viscosity measurement.

(Measurement of Viscosity of Resin Composition for Viscosity Measurement)

The obtained resin composition for viscosity measurement was measured for viscosity by using a dynamic viscoelasticity measuring device ("Rheosol-G3000" manufactured by UBM Kabushiki Kaisha). The measurement was performed at a gap of 1 mm at a shear rate of $1s^{-1}$ at 25°C by using a parallel plate having a diameter of 40 mm. A resin composition having a viscosity of less than 500 Pa·s was evaluated as having low viscosity and preferable flowability (O), and a resin composition having a viscosity of 500 Pa·s or more was evaluated as having high viscosity and poor flowability (×). The results are shown in Table 2.

[Table 2]

| | | Example 1 | Example 2 | Example 3 | Comparative Example 1 | Comparative Example 2 | Comparative Example 3 |
|---|---|---|---|---|---|---|---|
| Resin composition for viscosity measurement (mass %) | Alumina powder | 54 | 54 | 54 | 54 | 54 | 54 |
| | AA-5 | 27 | 27 | 27 | 27 | 27 | 27 |
| | AA-04 | 9 | 9 | 9 | 9 | 9 | 9 |
| | Resin 1 | 10 | 10 | 10 | 10 | 10 | 10 |
| Flowability | | ○ | ○ | ○ | ○ | ○ | × |

[Measurement of Heat Conductivity of Resin Composition]

(Production of Resin Composition for Heat-Conductivity Measurement)

First, a resin composition for heat-conductivity measurement was produced. The ratio (mass ratio) of the alumina powder shown in Table 1, AA-5 (particle size: 5 $\mu$m) manufactured by Sumitomo Chemical Co., Ltd., and AA-04 (particle size: 0.4 $\mu$m) manufactured by Sumitomo Chemical Co., Ltd. was adjusted to 6:3:1. The AA-5 and the AA-04 are each an alumina powder for filling other than the alumina powder according to the present embodiments, and are an alumina middle-sized particle and an alumina small-sized particle, respectively, used for achieving high filling on the supposition of an actual use. In present Examples, any of Examples use the alumina middle-sized particle and the alumina small-sized particle of the same type and of the same amount and, therefore, the difference in heat conductivity among the Examples can be attributed to the difference among the alumina powder shown in Table 1.

As a resin, a resin 1 (53-type epoxy main agent (manufactured by SANKEI Co., Ltd.)) and a resin 2 (53-type epoxy curing agent (manufactured by SANKEI Co., Ltd.)) were prepared. Thereafter, the resins 1 and 2 were blended with the alumina powders to the blending ratio shown in Table 3 (mass ratio of the alumina powders, the resin 1, and the resin 2), and then the resulting blend was mixed and kneaded by using a rotatable and revolvable mixer (ARV-310) manufactured by THINKY CORPORATION to obtain a resin composition for heat-conductivity measurement.

(Measurement of Heat Conductivity of Resin Composition)

5 g of the obtained resin composition for heat-conductivity measurement was poured into a metal mold having a diameter of 20 mm and molded by applying a pressure of 30 MPa, and then left at room temperature for 24 hours to cure the resin. Next, the cured molded product was processed into a size of 10 mm square × 2 mm thickness, and the surface thereof was polished to obtain a test piece. The heat conductivity in the thickness direction of this test piece was measured by a laser flash method by using a xenon flash analyzer (manufactured by NETZSCH Japan K.K., LFA467). The measurement was performed under an air atmosphere and at 25°C as the measurement condition. A resin composition having a heat conductivity of 4.3 W/(m·K) or more was evaluated as having high heat conductivity, and a resin composition having a heat conductivity of less than 4.3 W/ (m·K) was evaluated as having low heat conductivity. The results are shown in Table 3.

[Table 3]

| | | Example 1 | Example 2 | Example 3 | Comparative Example 1 | Comparative Example 2 | Comparative Example 3 |
|---|---|---|---|---|---|---|---|
| Resin composition for heat-conductivity measurement (mass %) | Alumina powder | 54 | 54 | 54 | 54 | 54 | 54 |
| | AA-5 | 27 | 27 | 27 | 27 | 27 | 27 |
| | AA-04 | 9 | 9 | 9 | 9 | 9 | 9 |
| | Resin 1 | 6.7 | 6.7 | 6.7 | 6.7 | 6.7 | 6.7 |
| | Resin 2 | 3.3 | 3.3 | 3.3 | 3.3 | 3.3 | 3.3 |
| Heat conductivity (W/(m·K)) | | 4.3 | 4.4 | 4.8 | 3.4 | 4.1 | 4.9 |

Tables 1 to 3 indicate that in the alumina powders of Examples 1 to 3, which are the ceramic particles according to the present embodiments, the distribution of the number-based cumulative circularity fell within the predetermined range, whereby the flowability during mixing with a resin was high, and the resin composition obtained by mixing the powder with the resin exhibited high heat conductivity.

On the other hand, in Comparative Examples 1 and 2, the circularity C10 at a cumulative percentage of 10% was high, and the resin composition obtained by mixing the powder with the resin had low heat conductivity. Also, in Comparative Example 3, the circularity C50 at a cumulative percentage of 50% was low and the flowability was poor.

The present application claims a priority to Japanese patent application No. 2022-124995 as a basic application, the content of which is incorporated herein by reference.

**Claims**

1. A ceramic powder having:

   a circularity C50 of 0.83 or more at a cumulative percentage of 50% from a lower circularity side in a number-based cumulative circularity distribution; and
   a circularity C10 of less than 0.81 at a cumulative percentage of 10% from the lower circularity side in the number-based cumulative circularity distribution.

2. The ceramic powder according to claim 1, wherein the ceramic powder has a particle size D50 of 70 to 250 $\mu$m at a cumulative percentage of 50% from a finer particle side in a volume-based cumulative particle size distribution.

3. The ceramic powder according to claim 1, wherein a circularity C90 at a cumulative percentage of 90% from the lower circularity side in the number-based cumulative circularity distribution, the circularity C10, and the circularity C50 satisfy the following expression (1):

$$(C90 - C10) / C50 \geq 0.11 ...(1).$$

4. The ceramic powder according to any one of claims 1 to 3, wherein the ceramic powder is an alumina powder comprising 90% or more of an $\alpha$-alumina phase.

5. A resin composition comprising the ceramic powder according to claim 4.

6. A method for producing the ceramic powder according to claim 4, the method comprising the steps of:

mixing and granulating a raw material powder by wet granulation to obtain a mixture;
drying the mixture at 30°C or more and 150°C or less to obtain a dry powder having a moisture content of 3 mass % or more and 55 mass % or less; and firing the dry powder.

Fig. 1

Fig. 2

Fig. 3

S4800 2.0kV 8.0mm x100 SE(M)        500um

## INTERNATIONAL SEARCH REPORT

| | International application No. |
|---|---|
| | **PCT/JP2023/027768** |

**A.    CLASSIFICATION OF SUBJECT MATTER**

***C01F 7/441***(2022.01)i; ***C01F 7/021***(2022.01)i; ***C01F 7/30***(2022.01)i; ***C08K 3/013***(2018.01)i; ***C08K 3/22***(2006.01)i; ***C08L 101/00***(2006.01)i

FI:    C01F7/441; C01F7/021; C01F7/30; C08K3/013; C08K3/22; C08L101/00

According to International Patent Classification (IPC) or to both national classification and IPC

**B.    FIELDS SEARCHED**

Minimum documentation searched (classification system followed by classification symbols)

C01F7/441; C01F7/021; C01F7/30; C08K3/013; C08K3/22; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/241716 A1 (DENKA COMPANY LTD) 03 December 2020 (2020-12-03) paragraphs [0007], [0044], [0095], table 1, example 4 | 1-5 |
| A | paragraphs [0021]-[0022] | 6 |
| A | JP 2021-172535 A (SHINETSU CHEMICAL CO) 01 November 2021 (2021-11-01) paragraph [0060] | 1-5 |
| A | entire text, all drawings | 6 |
| X | WO 2005/066252 A2 (SHOWA DENKO K.K.) 21 July 2005 (2005-07-21) p. 1, lines 14-21, p. 25, line 20 to p. 26, line 8, table 1, example 5 | 1, 3, 5 |
| A | entire text, all drawings | 2, 4, 6 |
| A | JP 62-128918 A (NORTON CO) 11 June 1987 (1987-06-11) entire text, all drawings | 1-5 |
| A | claims, p. 93, lower right column, line 10 to p. 94, upper right column, line 3 | 6 |
| A | WO 2021/200490 A1 (DENKA COMPANY LTD) 07 October 2021 (2021-10-07) entire text, all drawings | 1-6 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 September 2023** | **10 October 2023** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (January 2015)

**EP 4 566 995 A1**

**INTERNATIONAL SEARCH REPORT**

| International application No. |
|---|
| **PCT/JP2023/027768** |

**C. DOCUMENTS CONSIDERED TO BE RELEVANT**

| Category* | Citation of document, with indication, where appropriate, of the relevant passages | Relevant to claim No. |
|---|---|---|
| A | JP 8-290914 A (SUMITOMO CHEM CO LTD) 05 November 1996 (1996-11-05) entire text, all drawings | 1-6 |
| A | JP 2-074520 A (RHONE POULENC CHIMIE) 14 March 1990 (1990-03-14) entire text, all drawings | 1-6 |
| A | JP 2007-070474 A (DENKI KAGAKU KOGYO KK) 22 March 2007 (2007-03-22) entire text, all drawings | 1-6 |
| A | JP 2006-273969 A (MITSUI CHEMICALS INC) 12 October 2006 (2006-10-12) entire text, all drawings | 1-6 |
| A | WO 2022/059661 A1 (DENKA COMPANY LTD) 24 March 2022 (2022-03-24) entire text, all drawings | 1-6 |

Form PCT/ISA/210 (second sheet) (January 2015)

17

## INTERNATIONAL SEARCH REPORT
### Information on patent family members

International application No.

**PCT/JP2023/027768**

| Patent document cited in search report | Publication date (day/month/year) | Patent family member(s) | Publication date (day/month/year) |
|---|---|---|---|
| WO 2020/241716 A1 | 03 December 2020 | TW 202104084 A <br> paragraphs [0007], [0021]-[0022], [0044], [0095], table 1, example 4 | |
| JP 2021-172535 A | 01 November 2021 | (Family: none) | |
| WO 2005/066252 A2 | 21 July 2005 | JP 2005-306718 A <br> paragraphs [0001], [0061], table 1, example 5 <br> KR 10-2007-0026375 A <br> CN 1910122 A | |
| JP 62-128918 A | 11 June 1987 | US 4657754 A <br> entire text, all drawings <br> EP 224118 A1 | |
| WO 2021/200490 A1 | 07 October 2021 | US 2023/0134132 A1 <br> entire text, all drawings <br> EP 4129911 A1 <br> CN 115348952 A <br> KR 10-2022-0160018 A <br> TW 202142491 A | |
| JP 8-290914 A | 05 November 1996 | US 6162413 A <br> entire text, all drawings <br> EP 728700 A2 <br> CA 2169891 A <br> CN 1137489 A <br> KR 10-1996-0031343 A | |
| JP 2-074520 A | 14 March 1990 | US 5580539 A <br> entire text, all drawings <br> EP 353129 A1 <br> KR 10-1990-0001598 A | |
| JP 2007-070474 A | 22 March 2007 | (Family: none) | |
| JP 2006-273969 A | 12 October 2006 | (Family: none) | |
| WO 2022/059661 A1 | 24 March 2022 | CN 116235296 A <br> entire text, all drawings <br> KR 10-2023-0066369 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020170307 A

- JP 2022124995 A